# EUROPEAN PATENT SPECIFICATION

(11) **EP 1 753 188 B1**
(45) Date of publication and mention of the grant of the patent: **23.07.2008**
(21) Application number: 06741834.3
(22) Date of filing: 11.05.2006
(51) Int. Cl.: H04L 12/56

(54) **A METHOD FOR REALIZING THE DYNAMIC QOS IN WIMAX SYSTEM**
EIN VERFAHREN ZUM REALISIEREN VON DYNAMISCHER QoS IN EINEM WIMAX-SYSTEM
MÉTHODE POUR ASSURER UNE QdS DYNAMIQUE D UN SYSTÈME WIMAX

(30) Priority: 15.05.2005 CN 200510034686
(43) Date of publication of application: 14.02.2007
(73) Proprietor: Huawei Technologies Co., Ltd., Longgang District Shenzhen Guangdong 518129 (CN)
(72) Inventor: XU, Zizhen Huawei Administration Building, Shenzhen, Guangdong 518129 (CN); WU, Tao Huawei Administration Building, Shenzhen, Guangdong 518129 (CN); ZHENG, Ruobin Huawei Administration Building, Shenzhen, Guangdong 518219 (CN)
(74) Representative: Epping - Hermann - Fischer
(86) International application number: PCT/CN2006/000943
(87) International publication number: WO 2006/122481

(56) References cited:
- CA-A1- 2 353 250
- CN-A- 1 567 914
- US-A1- 2005 094 650
- US-B1- 6 515 972
- MANDATO D: "Presentation: Concepts of Service Adaption, Scalability, and QoS Handling on Mobility enabled Networks" IST MOBILE COMMUNICATION SUMMIT, 10 September 2001 (2001-09-10), pages 1-16, XP002205058

## Description

### Field of the Invention

The present invention relates to wireless access technology, and particularly to a method for realizing dynamic QoS in WIMAX system.

### Background of the Invention

BWA (Broadband Wireless Access) in current communication market, as a solution with high speed and low cost, is applied widely, in which WIMAX (Worldwide Interoperability for Microwave Access) based on 802.16 standard is a wireless Metropolitan Area Network technology which can realize "last mile" access, technically solving problems of physical layer environment (outdoor Radio Frequency (RF) transmission) and QoS (Quality of Service), so that WIMAX products can be used indoors and outdoors, and can deal with data access and voice and video services with higher real-time requirements, which can not be done by other BWA technologies.
Internet can provide services of only one level in the past, i.e. "best effort" service, in which, all data packets are treated equally, but actually, Internet can not ensure uniform quality service. When high congestion occurs in network, quality service will be very low. "Best effort" service has already not adapted to Internet-based voice and video applications and can not satisfy subscriber requirements very well. A solution which is put forward to meet different subscriber requirements is referred to as QoS, i.e. during network communications, subscriber services can attain to an expectable service level in aspects of packet loss ratio, delay, jitter and bandwidth. Technical problems to be solved by IP QoS include: avoiding congestion in IP network and managing IP network; decreasing loss ratio of IP packets; regulating traffic of IP network; providing bandwidth dedicated to specific subscribers or specific services; sustaining real time services over IP network. Data transmission in WIMAX system is connection-oriented, in which all data, upstream or downstream, are transmitted in association with a certain connection. Service stream carries one class of one-way data stream, and has lots of related attributes and three states, and when the state of service stream becomes Admitted state or Active state, the service stream is also referred as a connection. 4 types of service stream are defined in 802.lx, with different types of service stream having different bandwidth scheduling features, bandwidth request modes, and QoS parameter sets. All service data streams have a 32-bit SFID (Service Flow IDentifier) which is allocated by a BS (Base Station).
The types of service include: UGS (Unsolicited Grant Service), Rt-PS (Real-time Polling Service), Nrt-PS (Non real-time Polling Service) and BES (Best Effort Service).
UGS service: UGS service needs preserved bandwidth. BS will periodically notify SS (Subscriber Station) of available timeslot/bandwidth. There is no need for SS to transmit a bandwidth request and Bandwidth can be guaranteed. It is applicable to services with higher priority, and mainly applied to real-time services with fixed-length packets, such as T1/E1, VoIP (Voice over IP) and ATM private line.
Rt-PS service: does not preserve bandwidth, but bandwidth can be guaranteed and can be requested when needed. BS will allocate periodic bandwidth request timeslots to SS which are used for SS to request bandwidth from BS. It is applicable to services with high real-time requirement, and mainly applied to support real-time video services. Nrt-PS service: BS allocates non-periodic bandwidth request timeslots or competition request timeslots to SS; the request timeslots, if allocated, are very short intervals, ensuring that the service has transmission opportunities even in case of network congestion. It is applicable to services with low real-time requirement, such as FTP.
BES service: BES service transmits services with best effort. BES service transmits services upon obtaining bandwidth using a competition request timeslot allocated by BS. Bandwidth can not be guaranteed. BES service is applicable to services with lower priority, such as Web browsing and sending/receiving E-Mail.
Each type of service has a corresponding QoS parameter set, in which several main QoS parameters are:
Maximum Sustained traffic rate of a service stream: its unit is bits/s. SS must ensure that, in an upstream direction, an average rate of the service stream does not exceed the Maximum Sustained traffic rate. In an downstream direction, the traffic rate can be restricted at an ingress side of BS;
Maximum traffic burst of a service stream;
Minimum reserved traffic rate: if a requested bandwidth for a stream is less than the Minimum reserved traffic rate in a certain timeslot, BS will allocate remaining bandwidths to other streams temporarily;
Minimum tolerable traffic rate: BS will determine whether to modify traffic rate of a link or to delete the link according to the Minimum tolerable traffic rate and actual traffic rate;
Tolerated jitter: defines the maximum delay jitter of a stream. Its unit is ms.
Maximum latency: Maximum latency defines the maximum latency from a message having been received by a BS (or SS) from a network side till the message being transmitted from a RF interface.
There are two provisioning modes of resource (such as bandwidth): static provisioning and dynamic provisioning. Static provisioning means one in which service streams are issued through configuration by an entity, such as a network management system, a provisioning server, etc; dynamic provisioning means that service streams are dynamically issued through allocation of service streams parameters by a certain entity when service requirements (such as voice dial, connection, communication) really exist. Conventionally, QoS parameters are configured statically on BS and SS.

Since voice service has a very high requirement on bandwidth and delay, UGS service preserves bandwidth and such bandwidth is exclusive and non-shared; Rt-PS does not preserve bandwidth, but bandwidth therein can be guaranteed and can be requested when needed, so bandwidth and delay therein can be guaranteed. So the types of voice service are all defined as UGS service. Assuming an MG (Media Gateway) can accommodate 8 channels of voices, and all the 8-channel voice services are UGS service, an air interface (an interface between BS and SS is referred as an air interface) will preserve bandwidth for the 8-channel voice service stream respectively no matter whether voice channels are established or not, thus utilization rate of air-interface bandwidth is very low, which results in waste of air-interface bandwidth. Awareness service means that a device can parse a message, for example, the characteristic of a VoIP message is a specific UDP port number, then in order to become aware of VoIP service, UDP port number of VoIP message should be parsed, in order to become aware of service streams, such as VoIP service stream, etc., and perform process specifically based on service streams. In order to become aware of VoIP service stream, application layer in TCP/IP protocol stack should be analyzed. Traditional service awareness is performed by BS or SS, and QoS parameters are configured statically on BS and SS, which results in increased complexity of device implementation, lower processing performance of devices and increased cost, and is unfavorable for interconnection and intercommunication between WIMAX devices.

US 6,515,872 relates to a radio link adapter for wireless transmission of multimedia data through a communication link between a radio access network (RAN) and a mobile station (MS) . US 6, 515, 872 discloses that the information flow is constantly monitored to determine an information element (IE) type of service requirements and for allocating paired radio link adapters designed to fit the respective type of service requirements.

### Summary of the Invention

The embodiments of the present invention aim to provide a method for realizing dynamic QoS in a WIMAX system, which may reduce waste of air interface bandwidth caused by occupancy, simplify complexity of software implementation in BS and SS, and reduce cost, which may be favorable for interconnection and intercommunication between WIMAX devices of different manufacturers.
The embodiments of the present invention provides a method for realizing dynamic QoS in a WIMAX system, characterized by including the following steps:
an MGC(Media Gateway Controller) making awareness of service streams transmitted from an MG(Media Gateway), and transmits a resource request to a resource management server;
the resource management server, in response to the resource request, determines whether there is enough resource in a bearer network;
and if there is enough resource, the resource management server acknowledges the resource request, and transmits a resource allocation instruction and QoS parameters matching the type of service to a base station, and after receiving the resource allocation instruction, the base station allocates resource to a subscriber station, thus a service channel from the MGC to the MG via the base station and the subscriber station is established;
or the resource management server refuses the resource request if there is not enough resource.

According to a preferred embodiment of the invention the method further includes the following steps: when the service channel is established, the MGC notifies an associated MG to transmit a prompt signal to a calling terminal and a called terminal respectively.

According to a further preferred embodiment of the invention a service stream between the calling terminal and the called terminal is activated once the called terminal answers.

According to a further preferred embodiment of the invention, if the resource request is refused, the MGC notifies the MG to send a busy tone back to the calling terminal.

According to further preferred embodiment of the invention a calling terminal reports a request information to an MGC via an MG and the MGC notifies an associated MG to transmit a prompt signal to a calling terminal and a called terminal respectively and the calling terminal dials and the MG reports the dialing information to the MGC.

According to a further preferred embodiment of the invention a resource management server negotiates resource with the base station by means of COPS (Common Open Policy Service) protocol and a connection between a BS and an SS is established by means of dynamic service addition signal request, and resource is allocated after the connection is established.

According to a further preferred embodiment of the invention, when the calling terminal is a wireless access terminal and the called terminal is a wired access terminal, the BS is a calling BS and the SS is a calling SS.

According to a further preferred embodiment of the invention when the calling terminal is a wired access terminal and the called terminal is a wireless access terminal, the BS is used as a called BS and the SS is used as a called SS.

According to a further preferred embodiment of the invention when the calling terminal and the called terminal are both wireless access terminals, the BS is used as both a calling BS and a called BS, and the SS is a calling SS or a called SS.

According to a further preferred embodiment of the invention the MG is Integrated Access Device (Integrated Access Device), AG (Access Gateway), AMG (Access Media Gateway), or UMG (Universal Media Gateway).

According to the technical solution provided by the embodiments of the present invention described above, BS and SS do not make awareness of services, so that difficulties in software implementation in BS and SS are reduced and the cost is reduced too, which is favorable for interconnection and intercommunication between WiMAX devices; BS and SS only process information of Layer 2, which reduces difficulties in networking planning; and bandwidth need not be preserved for UGS or Rt-polling service stream, but is dynamically requested when there is a service request, which increases utilization rate of air interface bandwidth; BS supports COPS protocol, and negotiates resource with RM by means of COPS protocol; QoS parameters are issued dynamically by RM instead of being configured statically on BS and SS, thus network resource management is more flexible and convenient.

### Brief Description of the Drawings

Fig.1 is a schematic diagram of an architecture of implementation of dynamic QoS in a WIMAX system;
Fig.2 is a flow chart of implementing dynamic QoS when a resource request succeeds in an embodiment of the present invention;
Fig.3 is a flow chart of processing when a resource request fails in an embodiment of the present invention;
Fig.4 is a flow chart of implementing dynamic QoS when a resource request succeeds in an embodiment of the present invention;
Fig.5 is a flow chart of processing when a resource request fails in an embodiment of the present invention;
Fig.6 is a flow chart of implementing dynamic QoS when a resource request succeeds in an embodiment of the present invention;
Fig.7 is a flow chart of processing when a resource request fails in an embodiment of the present invention.

### Detailed Description of the Embodiments

The present invention will be further described in conjunction with the accompanying drawings and the following embodiments.
Hereafter, the present invention will be described with a soft switch device Softswitch used as an MGC and an integrated access device IAD used as MG.

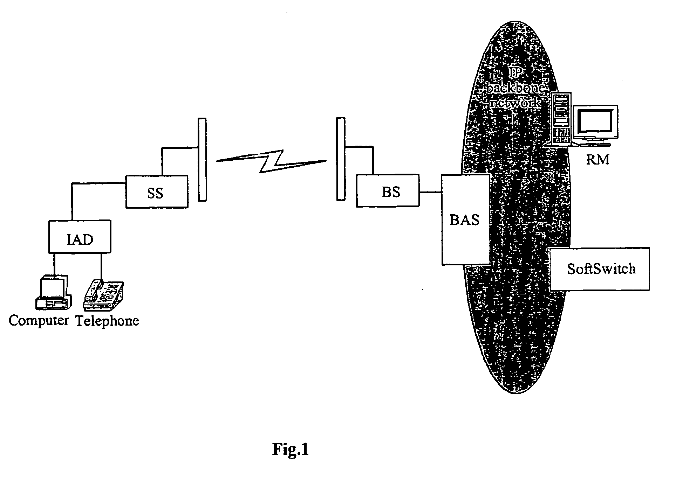

Fig.1 shows a schematic diagram of system architecture of implementing dynamic QoS in a WIMAX system, which mainly includes: IAD (integrated access device), BS (base station), SS (subscriber station), BAS (Broadband Access Server), soft switch device Softswitch and RM (resource management); and in addition, also includes a calling terminal and a called terminal, at least one of which is a wireless access terminal.
The IAD, which serves as an MG, is directly connected to subscriber terminals, used to receive data and voices from the terminals, and processes media streams. IAD is only a kind of MG, and, as an MG, it can be replaced with AG (Access Gateway), AMG (Access Media Gateway), UMG (Universal Media Gateway), STB (Set-Top-Box) or IP video telephone, etc.

IAD, SS and BS are successively connected and form a service channel. BAS and BS are connected with each other implementing management of broadband access subscribers. Softswitch, serving as an MGC, is connected with the BAS and controls the IAD to perform calling process. After receiving a resource request from the Softswitch, an RM, according to network topology and usage of resource, decides whether to admit the request and perform CAC (connection admission control), i.e., whether to process DSA/DSC/DSD request from SS, wherein, RM is responsible for management of network resource, determines whether there is enough resource in a bearer network (IP backbone network) and interacts with the bearer network using COPS protocol to ensure that there is enough resource on path of a service stream and to guarantee End-to-End QoS.
A service flow of the present invention will be described in detail taking VoIP service as an example.
(I) when the calling terminal is a wireless access terminal and the called terminal is a wired access terminal:

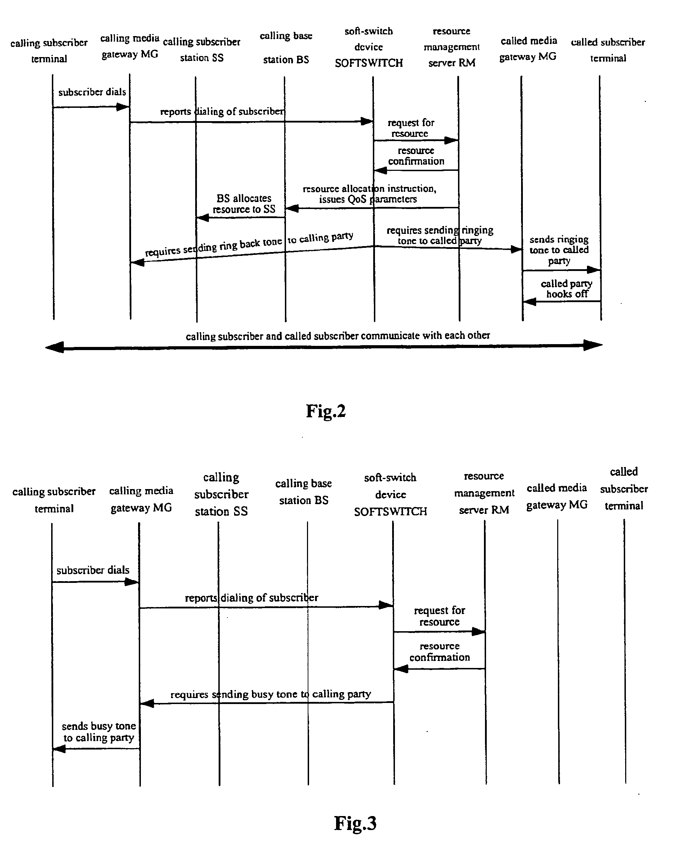

   Fig.2 illustrates a service flow when a resource request succeeds according to an embodiment of the invention. The first step: the calling subscriber terminal dials, which is reported to the Softswitch via the calling IAD, the calling SS and the calling BS successively; the Softswitch requests resource from the RM; the BS and the SS do not make awareness of the service and the Softswitch makes awareness of the service. The second step: the RM determines that there is enough resource in the current bearer network and transmits an resource confirmation signal to the Softswitch, transmits a resource allocation instruction to the calling BS at the same time and issues QoS parameters matching the type of the service. Resource is allocated from the calling BS to the calling SS. QoS parameters are issued dynamically by the RM instead of being configured statically on the BS and the SS. The RM negotiates resource with the calling BS by means of COPS protocol, both of the RM and the BS supporting COPS protocol. A connection between the BS and the SS is established by means of DSA (dynamic service addition) signal request), and bandwidth can be allocated only after the connection is established.
   The third step: after attaining resource, the Softswitch continues communications with the calling MG and the called MG respectively. The Softswitch notifies the calling MG to send a ring back tone to the calling terminal, and notifies the called MG to send a ringing tone to the called terminal. The fourth step: when the called terminal hooks off, a service stream between the calling terminal and the called terminal is activated and voice communications between the calling terminal and the called terminal starts. A service stream between the calling terminal and the called terminal is activated only when the called terminal is put through, and at that time the service stream will occupy air-interface bandwidth.
   Fig.3 illustrates a service flow when a resource request fails according to an embodiment of the invention. The first step: the calling subscriber terminal hooks off and dials, which is reported to the Softswitch via the calling MG( IAD shown in Fig.1), the calling SS and the calling BS successively, and the Softswitch requests resource from the RM; the second step: the RM determines that there is not enough resource in the current bearer network and transmits a resource denial signal to the Softswitch; the calling MG sends a busy tone back to the calling terminal, and the calling party hangs up. Voice communication requirement is denied and air interface bandwidth is not occupied by service streams.
(II) When the calling terminal is a wired access terminal and the called terminal is a wireless access terminal:

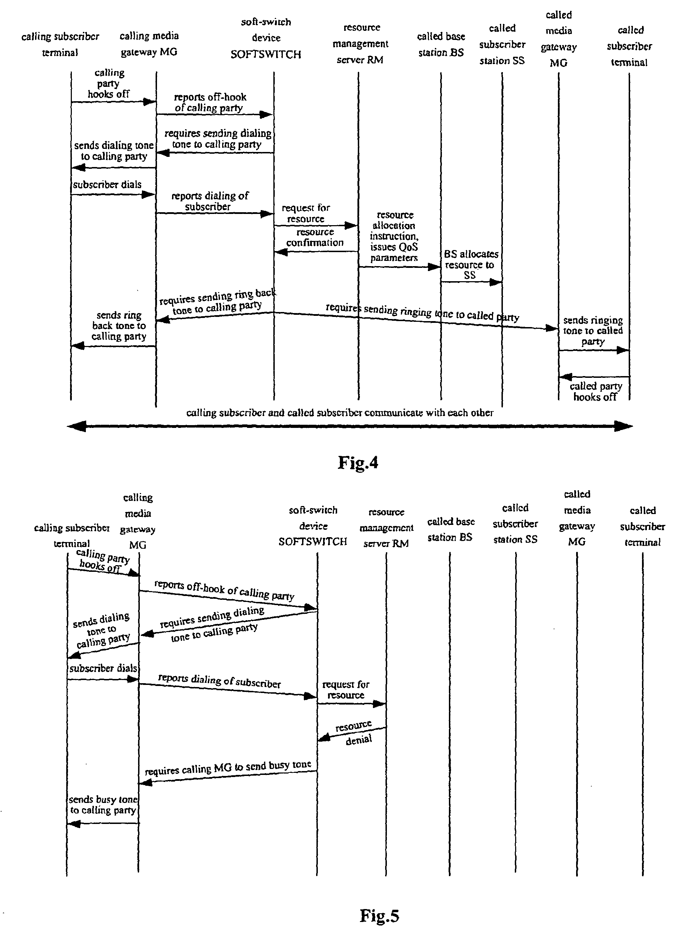

   Fig.4 illustrates a service flow when a resource request succeeds. The first step: the calling subscriber terminal hooks off, and the calling MG reports the off-hook information to the Softswitch; the second step: the Softswitch notifies the calling MG to transmit a dialing tone to the subscriber terminal; the third step: the calling subscriber terminal dials, and the Softswitch requests resource from an RM immediately after the calling MG reports the dialing to the Softswitch; the fourth step: the RM determines that there is enough resource in the current bearer network, transmits a resource confirmation signal to the Softswitch, transmits a resource allocation instruction to the called BS at the same time, and issues QoS parameters. The called BS allocates resource to the called SS correspondingly, and the RM negotiates resource with the called BS by means of COPS protocol. The called BS transmits a DSA request to the called SS, and bandwidth is allocated after a connection is established; the fifth step: the Softswitch continues its voice communications with the calling MG and the called MG respectively; the Softswitch notifies the calling MG to send a ring back tone to the calling terminal, and notifies the called MG to send a ringing tone to the called terminal simultaneously; the sixth step: when the called terminal hooks off, a service stream between the calling terminal and the called terminal is activated, and voice communications between the calling terminal and the called terminal is established.
   Fig.5 illustrates a service flow when a resource request fails according to an embodiment of the invention. The first step: the calling subscriber terminal hooks off, and the MG reports the off-hook information to the Softswitch; the second step: the Softswitch notifies the calling MG to transmit a dialing tone to the subscriber terminal; the third step: the calling subscriber terminal dials, and the Softswitch requests resource from the RM immediately after the calling MG reports the dialing information to the Softswitch; the fourth step: the RM determines that there is not enough resource in the current bearer network and transmits a resource denial signal to the Softswitch, and the calling MG sends a busy tone back to the calling terminal.
(III) When the calling terminal and the called terminal are both wireless access terminals:

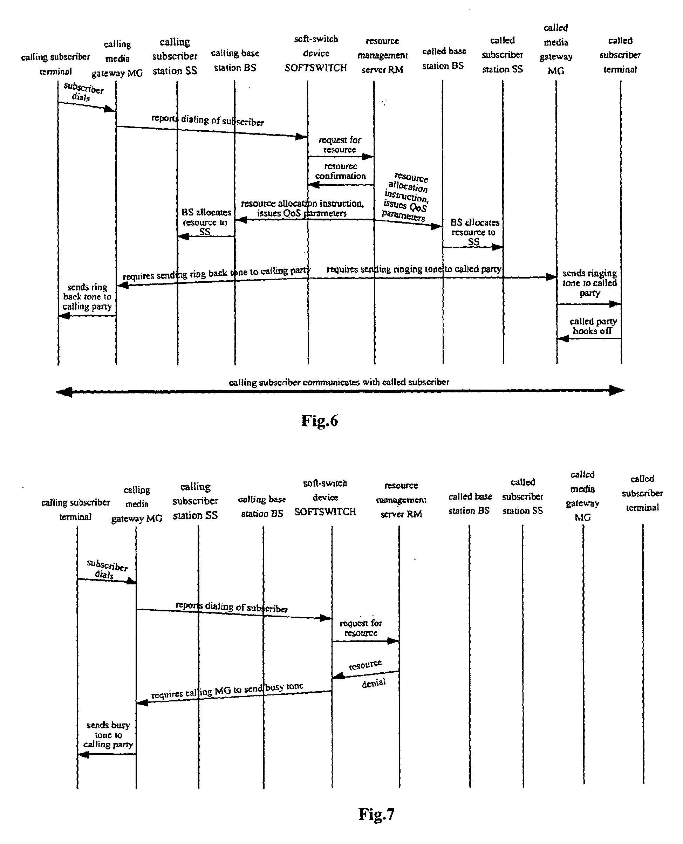

   Fig.6 illustrates a service flow when a resource request succeeds according to an embodiment of the invention. The first step: the calling subscriber terminal dials, which is reported to the Softswitch via the calling MG(IAD shown in Fig.1), the calling SS and the calling BS successively, and the Softswitch requests resource from the RM; the second step: the RM determines that there is enough resource in the current bearer network, transmits a resource confirmation signal to the Softswitch, transmits an instruction of resource allocation to the calling BS and the called BS simultaneously and issues QoS parameters. The calling BS allocates resource to the calling SS accordingly and the called BS allocates resource to called SS accordingly. RM negotiates resource with the calling BS and the called BS respectively by means of COPS protocol. After attaining resource, the calling BS originates a DSA request to the calling SS, a connection is established and bandwidth is allocated; at the same time, the called BS originates a DSA request to the called SS, a connection is established and bandwidth is allocated. The third step: the Softswitch continues its voice communications with the calling MG and the called MG respectively, and the Softswitch notifies the calling MG to send a ring back tone to the calling terminal, and notifies the called MG to send a ringing tone to the called terminal simultaneously; the fourth step: when the called terminal hooks off, a service stream between the calling terminal and the called terminal is activated and voice communications between the calling terminal and the called terminal are established.
   Fig.7 illustrates a service flow when a resource request fails according to an embodiment of the invention. The first step: the calling terminal subscriber dials, which is reported to the Softswitch via the calling MG (IAD shown in Fig.1), the calling SS and the calling BS successively, and the Softswitch requests resource from the RM; the second step: the softswitch determines that there is not enough resource in the current bearer network and transmits a resource denial signal to the Softswitch; the calling MG sends a busy tone back to the calling terminal.

In addition to VoIP, the above method for realizing dynamic QoS can also be applied to services such as VOD and video-conference, etc. The processing thereof is similar to the above and will not be described again.

The above embodiments of the present invention are described by taking a soft switch device Softswitch as an MGC, an integrated access device IAD as an MG, but apparently, other similar devices which can function as MGC or MG can also be applied herein.

It will be apparent to those skilled in the art that the present invention does not limit to the above specific embodiments and various modifications and variations can be made in the present invention. It is intended that the present invention covers the modifications and variations provided they come within the scope of the appended claims and their equivalents.

## Claims

1. A method for realizing dynamic quality of service in a Worldwide Interoperability for Microwave Access system, **characterized by** comprising:
a Media Gateway Control making awareness of a service stream transmitted from a Media Gateway and transmitting a resource request to a resource management server;
the resource management server, in response to the resource request, determining whether there is enough resource in a bearer network; and
if there is enough resource, the resource management server acknowledging the resource request, and transmitting a resource allocation instruction and quality of service parameters matching type of the resource to a base station, and after receiving the resource allocation instruction, the base station allocating resource to a subscriber station, thus a service channel from the Media Gateway Control to the Media Gateway via the base station and the subscriber station being established;
if there is not enough resource, the resource management server refusing the resource request.

2. The method for realizing dynamic quality of service in a Worldwide Interoperability for Microwave Access system according to claim 1, further comprising: when the service channel is established, the Media Gateway Control instructing an associated Media Gateway to transmit a prompt signal to a calling terminal and a called terminal respectively.

3. The method for realizing dynamic quality of service in a Worldwide Interoperability for Microwave Access system according to claim 2, further comprising: when the called terminal answers, a service stream between the calling terminal and the called terminal is activated.

4. The method for realizing dynamic quality of service in a Worldwide Interoperability for Microwave Access system according to claim 1, further comprising: when the resource request is refused, the Media Gateway Control notifying the Media Gateway to send a busy tone back to a calling terminal.

5. The method for realizing dynamic quality of service in a Worldwide Interoperability for Microwave Access system according to claim 1, further comprising:
a calling terminal reporting request information to the Media Gateway Control via the Media Gateway;
the Media Gateway Control notifying an associated Media Gateway to transmit a prompt signal to the calling terminal and a called terminal respectively;
the calling terminal dialing and the Media Gateway reporting the dialing information to the Media Gateway Control.

6. The method for realizing dynamic quality of service in a Worldwide Interoperability for Microwave Access system according to claim 1, wherein, the resource management server negotiates resource with the base station using Common Open Policy Service protocol;
a connection between the base station and the subscriber station is established by means of a Dynamic Service Addition signal request, and resource is allocated after the connection is established.

7. The method for realizing dynamic quality of service in a Worldwide Interoperability for Microwave Access system according to claim 1, further comprising:
when a calling terminal is a wireless access terminal and a called terminal is a wired access terminal, the base station being a calling base station and the subscriber station being a calling subscriber station.

8. The method for realizing dynamic quality of service according to claim 1, further comprising:
when a calling terminal is a wired access terminal and a called terminal is a wireless access terminal, the base station being a called base station and the subscriber station being a called subscriber station.

9. The method for realizing dynamic quality of service in a Worldwide Interoperability for Microwave Access system according to claim 1, further comprising:
when a calling terminal and a called terminal are both wireless access terminals, the base station being a calling base station or a called base station, the subscriber station being a calling subscriber station or a called subscriber station.

10. The method for realizing dynamic quality of service in a Worldwide Interoperability for Microwave Access system according to any one of claims 1 to 9, wherein, the media gateway is an Integrated Access Device, an Access Gateway, an Access Media Gateway, or an Universal Media Gateway.

11. A Worldwide Interoperability for Microwave Access system, comprising:
a Media Gateway, a Media Gateway Control, a resource management server, a base station and a subscriber station;
wherein the Media Gateway Control is adapted to make awareness of a service stream transmitted from the Media Gateway and to transmit a resource request to the resource management server;
the resource management server is adapted to, in response to the resource request, determine whether there is enough resource in a bearer network; and
if there is enough resource, the resource management server is adapted to acknowledge the resource request, and to transmit a resource allocation instruction and quality of service parameters matching type of the resource to the base station, and after receiving the resource allocation instruction, the base station is adapted to allocate resource to the subscriber station, thus the system being capable of allowing the establishment of a service channel from the Media Gateway Control to the Media Gateway via the base station and the subscriber station; if there is not enough resource, the resource management server is adapted to refuse the resource request.

12. The Worldwide Interoperability for Microwave Access system according to claim 11, wherein: an associated Media Gateway is adapted to be instructed by the Media Gateway Control to transmit a prompt signal to a calling terminal and a called terminal respectively when the service channel is established.

13. The Worldwide Interoperability for Microwave Access system according to claim 11, wherein, the Media Gateway is connected to subscriber terminals, for receiving data and voices from the terminals.

14. The Worldwide Interoperability for Microwave Access system according to claim 11, wherein, the Media Gateway is an Integrated Access Device, an Access Gateway, an Access Media Gateway, or an Universal Media Gateway.

15. The Worldwide Interoperability for Microwave Access system according to claim 11, further comprising a Broadband Access Server connected with the base station for implementing management of broadband access subscribers.

16. The Worldwide Interoperability for Microwave Access system according to claim 11, wherein, the Media Gateway Control is a soft switch device.

## Patentansprüche

1. Verfahren zum Realisieren einer dynamischen Dienstgüte in einem Worldwide Interoperability for Microwave Access System, **dadurch gekennzeichnet, dass** es folgendes umfasst:
eine Medien-Gateway-Steuerung, die einen Dienst-Datenstrom erkennt, der von einem Medien-Gateway gesendet wird, und eine Ressourcen-Anforderung an einen Ressourcen-Management-Server sendet;
der Ressourcen-Management-Server bestimmt als Reaktion auf die Ressourcen-Anforderung, ob genug Ressourcen in einem Übermittlungsnetzwerk vorhanden sind; und
wenn genug Ressourcen vorhanden sind, quittiert der Ressourcen-Management-Server die Ressourcen-Anforderung, und sendet eine Ressourcen-Zuweisungs-Anweisung und Dienstgüte-Parameter, die zum Typ der Ressource passen, zu einer Basisstation, und nach dem Empfang der Ressourcen-Zuweisungs-Anweisung weist die Basisstation die Ressource einer Teilnehmerstation zu, wodurch ein Dienstkanal von der Medien-Gateway-Steuerung zum Medien-Gateway über die Basisstation und die Teilnehmerstation aufgebaut wird;
wenn nicht genug Ressourcen vorhanden sind, lehnt der Ressourcen-Management-Server die Ressourcen-Anforderung ab.

2. Verfahren zum Realisieren einer dynamischen Dienstgüte in einem Worldwide Interoperability for Microwave Access System gemäß Anspruch 1, das ferner folgendes umfasst:
Wenn der Dienstkanal aufgebaut ist, gibt die Medien-Gateway-Steuerung einem zugeordneten Medien-Gateway die Anweisung, ein Abfragesignal an ein anrufendes Endgerät, bzw. ein angerufenes Endgerät zu senden.

3. Verfahren zum Realisieren einer dynamischen Dienstgüte in einem Worldwide Interoperability for Microwave Access System gemäß Anspruch 2, das ferner folgendes umfasst:
Wenn das angerufene Endgerät antwortet, wird ein Dienst-Datenstrom zwischen dem anrufenden und dem angerufenen Endgerät aktiviert.

4. Verfahren zum Realisieren einer dynamischen Dienstgüte in einem Worldwide Interoperability for Microwave Access System gemäß Anspruch 1, das ferner folgendes umfasst:
Wenn die Ressourcen-Anforderung abgelehnt wird, benachrichtigt die Medien-Gateway-Steuerung den Medien-Gateway, einen Besetztton zurück zu einem anrufenden Endgerät zu senden.

5. Verfahren zum Realisieren einer dynamischen Dienstgüte in einem Worldwide Interoperability for Microwave Access System gemäß Anspruch 1, das ferner folgendes umfasst:
Ein anrufendes Endgerät liefert Anforderungs-Information über den Medien-Gateway an die Medien-Gateway-Steuerung;
die Medien-Gateway-Steuerung benachrichtigt einen zugehörigen Medien-Gateway, ein Abfrage-Signal an das anrufende, bzw. angerufene Endgerät zu senden;
das anrufende Endgerät wählt, und der Medien-Gateway meldet die Wahlinformation an die Medien-Gateway-Steuerung.

6. Verfahren zum Realisieren einer dynamischen Dienstgüte in einem Worldwide Interoperability for Microwave Access System gemäß Anspruch 1, wobei der Ressourcen-Management-Server die Ressource mit der Basisstation unter Verwendung des Common Open Policy Service Protokolls aushandelt;
eine Verbindung zwischen der Basisstation und der Teilnehmerstation durch eine Dynamic Service Addition Signal-Anforderung aufgebaut wird, und die Ressource zugewiesen wird, nachdem die Verbindung aufgebaut wurde.

7. Verfahren zum Realisieren einer dynamischen Dienstgüte in einem Worldwide Interoperability for Microwave Access System gemäß Anspruch 1, das ferner folgendes umfasst:
Wenn ein anrufendes Endgerät ein drahtloses Zugangs-Endgerät ist, und ein angerufenes Endgerät ein drahtgebundenes Zugangs-Endgerät ist, ist die Basisstation eine anrufende Basisstation, und die Teilnehmerstation ist eine anrufende Teilnehmerstation.

8. Verfahren zum Realisieren einer dynamischen Dienstgüte gemäß Anspruch 1, das ferner folgendes umfasst:
Wenn ein anrufendes Endgerät ein drahtgebundenes Zugangs-Endgerät ist, und ein angerufenes Endgerät ein drahtloses Zugangs-Endgerät ist, ist die Basisstation eine angerufene Basisstation, und die Teilnehmerstation ist eine angerufene Teilnehmerstation.

9. Verfahren zum Realisieren einer dynamischen Dienstgüte in einem Worldwide Interoperability for Microwave Access System gemäß Anspruch 1, das ferner folgendes umfasst:
Wenn ein anrufendes Endgerät und ein angerufenes Endgerät beide drahtlose Zugangs-Endgeräte sind, ist die Basisstation eine anrufende Basisstation oder eine angerufene Basisstation, die Teilnehmerstation eine anrufende Teilnehmerstation oder eine angerufene Teilnehmerstation.

10. Verfahren zum Realisieren einer dynamischen Dienstgüte in einem Worldwide Interoperability for Microwave Access System gemäß einem beliebigen der Ansprüche 1 bis 9, wobei der Medien-Gateway eine integrierte Zugangs-Einrichtung, ein Zugangs-Gateway, ein Zugangs-Medien-Gateway oder ein universeller Medien-Gateway ist.

11. Worldwide Interoperability for Microwave Access System, umfassend:
einen Medien-Gateway, eine Medien-Gateway-Steuerung, einen Ressourcen-Management-Server, eine Basisstation und eine Teilnehmerstation;
wobei die Medien-Gateway-Steuerung angepasst ist, einen Dienst-Datenstrom zu erkennen, der von dem Medien-Gateway gesendet wird, und eine Ressourcen-Anforderung an den Ressourcen-Management-Server zu senden;
der Ressourcen-Management-Server ist angepasst, als Reaktion auf die Ressourcen-Anforderung zu bestimmen, ob genug Ressourcen in einem Übermittlungsnetzwerk vorhanden sind; und
wenn genug Ressourcen vorhanden sind, ist der Ressourcen-Management-Server angepasst, die Ressourcen-Anforderung zu quittieren, und eine Ressourcen-Zuweisungs-Anweisung und Dienstgüte-Parameter, die zum Typ der Ressource passen, zu der Basisstation zu senden, und nach dem Empfang der Ressourcen-Zuweisungs-Anweisung ist die Basisstation angepasst, die Ressource der Teilnehmerstation zuzuweisen, so dass das System in der Lage ist, den Aufbau eines Dienstkanals von der Medien-Gateway-Steuerung zum Medien-Gateway über die Basisstation und die Teilnehmerstation zu erlauben;
wenn nicht genug Ressourcen vorhanden sind, ist der Ressourcen-Management-Server angepasst, die Ressourcen-Anforderung abzulehnen.

12. Worldwide Interoperability for Microwave Access System gemäß Anspruch 11, wobei: ein zugeordneter Medien-Gateway angepasst ist, von der Medien-Gateway-Steuerung die Anweisung zu erhalten, ein Abfragesignal an ein anrufendes Endgerät, bzw. ein angerufenes Endgerät zu senden, wenn der Dienstkanal aufgebaut ist.

13. Worldwide Interoperability for Microwave Access System gemäß Anspruch 11, wobei der Medien-Gateway mit Teilnehmer-Endgeräten verbunden ist, um Daten und Sprachsignale von den Endgeräten zu empfangen.

14. Worldwide Interoperability for Microwave Access System gemäß Anspruch 11, wobei der Medien-Gateway eine integrierte Zugangs-Einrichtung, ein Zugangs-Gateway, ein Zugangs-Medien-Gateway oder ein universeller Medien-Gateway ist.

15. Worldwide Interoperability for Microwave Access System gemäß Anspruch 11, das ferner einen Breitband-Zugangs-Server enthält, der mit der Basisstation verbunden ist, um die Verwaltung von Teilnehmern mit Breitbandzugang zu implementieren.

16. Worldwide Interoperability for Microwave Access System gemäß Anspruch 11, wobei die Medien-Gateway-Steuerung eine Soft-Switch-Einrichtung ist.

## Revendications

1. Méthode pour réaliser une qualité de service dynamique dans un système selon le standard Worldwide Interoperability for Microwave Access (WiMax), **caractérisée en ce qu'**elle comprend :
un contrôleur de passerelle de conversion de médias donnant connaissance d'un flux de service transmis à partir d'une passerelle de conversion de médias et transmettant une requête de ressources à un serveur de gestion de ressources ;
le serveur de gestion de ressources, en réponse à la requête de ressources, détermine s'il existe des ressources suffisantes dans un réseau-support ; et
s'il existe suffisamment de ressources, le serveur de gestion de ressources accuse réception de la requête de ressources et transmet une instruction d'allocation de ressources et une qualité de paramètres de service correspondant au type de ressources à une station de base et, après avoir reçu l'instruction d'allocation de ressources, la station de base alloue des ressources à une station d'abonné, établissant de ce fait une voie de service du contrôleur de passerelle de conversion de médias à la passerelle de conversion de médias via la station de base et la station d'abonné ;
s'il n'existe pas de ressources suffisantes, le serveur de gestion de ressources refuse la requête de ressources.

2. Méthode pour réaliser une qualité de service dynamique dans un système selon le standard Worldwide Interoperability for Microwave Access (WiMax) selon la revendication 1, comprenant en outre : une fois que la voie de service est établie, le contrôleur de passerelle de conversion de médias instruit une passerelle de conversion de médias associée pour transmettre un signal d'invite respectivement à un terminal appelant et à un terminal appelé.

3. Méthode pour réaliser une qualité de service dynamique dans un système selon le standard Worldwide Interoperability for Microwave Access (WiMax) selon la revendication 2, comprenant en outre : lorsque le terminal appelé répond, un flux de service s'active entre le terminal appelant et le terminal appelé.

4. Méthode pour réaliser une qualité de service dynamique dans un système selon le standard Worldwide Interoperability for Microwave Access (WiMax) selon la revendication 1, comprenant en outre : si la requête de ressources est refusée, le contrôleur de passerelle de conversion de médias notifie la passerelle de conversion de médias de renvoyer une tonalité d'occupation au terminal appelant.

5. Méthode pour réaliser une qualité de service dynamique dans un système selon le standard Worldwide Interoperability for Microwave Access (WiMax) selon la revendication 1, comprenant en outre :
le terminant appelant fait rapport des informations de requête au contrôleur de passerelle de conversion de médias via la passerelle de conversion de médias ;
le contrôleur de passerelle de conversion de médias notifie une passerelle de conversion de médias associée afin de transmettre un signal d'invite respectivement au terminal appelant et à un terminal appelé ;
le terminal appelant numérote et la passerelle de conversion de médias fait rapport des informations de numérotation au contrôleur de passerelle de conversion de médias.

6. Méthode pour réaliser une qualité de service dynamique dans un système selon le standard Worldwide Interoperability for Microwave Access (WiMax) selon la revendication 1, dans laquelle le serveur de gestion de ressources négocie les ressources avec la station de base en utilisant le protocole Common Open Policy Service ;
une connexion entre la station de base et la station d'abonné est établie au moyen d'une requête par signal Dynamic Service Addition et des ressources sont allouées après que la connexion ait été établie.

7. Méthode pour réaliser une qualité de service dynamique dans un système selon le standard Worldwide Interoperability for Microwave Access (WiMax) selon la revendication 1, comprenant en outre :
lorsque le terminal appelant est un terminal d'accès sans fil et un terminal appelé est un terminal d'accès par câble, la station de base est une station de base appelante et la station d'abonné est une station d'abonnée appelante.

8. Méthode pour réaliser une qualité de service dynamique selon la revendication 1, comprenant en outre :
lorsque le terminal appelant est un terminal d'accès sans fil et un terminal appelé est un terminal d'accès par câble, la station de base est une station de base appelante et la station d'abonné est une station d'abonné appelante.

9. Méthode pour réaliser une qualité de service dynamique dans un système selon le standard Worldwide Interoperability for Microwave Access (WiMax) selon la revendication 1, comprenant en outre :
lorsqu'un terminal appelant et un terminal appelé sont tous les deux des terminaux d'accès sans fil, la station de base est une station de base appelante ou une station de base appelée, la station d'abonné est une station d'abonnée appelante ou une station d'abonné appelée.

10. Méthode pour réaliser une qualité de service dynamique dans un système selon le standard Worldwide Interoperability for Microwave Access (WiMax) selon l'une quelconque des revendications 1 à 9, dans laquelle la passerelle de conversion de médias est un équipement d'accès intégré, une passerelle d'accès, une passerelle de conversion de médias d'accès ou une passerelle de conversion de médias universelle.

11. Système selon le standard Worldwide Interoperability for Microwave Access (WiMax), comprenant :
une passerelle de conversion de médias, un contrôleur de passerelle de conversion de médias, un serveur de gestion de ressources, une station de base et une station d'abonné;
dans lequel le contrôleur de passerelle de conversion de médias est adapté pour donner connaissance d'un flux de service transmis à partir de la passerelle de conversion de médias et pour transmettre une requête de ressources au serveur de gestion de ressources ;
le serveur de gestion de ressources est adapté pour déterminant s'il existe des ressources suffisantes dans un réseau-support en réponse à la requête de ressources ; et
s'il existe suffisamment de ressources, le serveur de gestion de ressources est adapté pour accuser réception de la requête de ressources et pour transmettre une instruction d'allocation de ressources et une qualité de paramètres de service correspondant au type de ressources à une station de base et, après avoir reçu l'instruction d'allocation de ressources, la station de base est adaptée pour allouer des ressources à la station d'abonné, le système étant de ce fait capable d'autoriser l'établissement d'une voie de service du contrôleur de passerelle de conversion de médias à la passerelle de conversion de médias via la station de base et la station d'abonné ; s'il n'existe pas suffisamment de ressources, le serveur de gestion de ressources est adapté pour refuser la requête de ressources.

12. Système selon le standard Worldwide Interoperability for Microwave Access (WiMax) selon la revendication 11, dans lequel : une passerelle de conversion de médias associée est adaptée pour être instruite par le contrôleur de passerelle de conversion de médias afin de transmettre un signal d'invite respectivement à un terminal appelant et à un terminal appelé une fois que la voie de service est établie.

13. Système selon le standard Worldwide Interoperability for Microwave Access (WiMax) selon la revendication 11, dans lequel la passerelle de conversion de médias est connectée à des terminaux d'abonné pour recevoir des données et des voix à partir des terminaux.

14. Système selon le standard Worldwide Interoperability for Microwave Access (WiMax) selon la revendication 11, dans lequel la passerelle de conversion de médias est un équipement d'accès intégré, une passerelle d'accès, une passerelle de conversion de médias d'accès ou une passerelle de conversion de médias universelle.

15. Système selon le standard Worldwide Interoperability for Microwave Access (WiMax) selon la revendication 11, comprenant en outre un serveur d'accès à large bande connecté à la station de base pour exécuter la gestion des abonnés à l'accès à large bande.

16. Système selon le standard Worldwide Interoperability for Microwave Access (WiMax) selon la revendication 11, dans lequel le contrôleur de passerelle de conversion de médias est un commutateur logiciel.
